# EUROPEAN PATENT APPLICATION

(11) **EP 4 054 087 A1**
(43) Date of publication of application: **07.09.2022**
(21) Application number: 21159968.3
(22) Date of filing: 01.03.2021
(51) Int. Cl.: H04B 7/06, H04B 7/08

(54) **SOFTWARE LOADING VIA RF COMMUNICATION WITH BEAM FORMING AND BEAM TRACKING**

(71) Applicant: Siemens Aktiengesellschaft, 80333 München (DE)
(72) Inventor: Bahr, Michael, 81827 München (DE); Kloiber, Bernhard, 83620 Feldkirchen-Westerham (DE); Michailow, Nicola, 81825 München (DE); Striffler, Tobias, 81669 München (DE)

(57) **Abstract**

The invention discloses an automated method for wireless data transfer from a RF transmitter unit (5) to a RF reiver unit (1.1) of a moveable object (1) in a production site (2, 2.1 - 2.3), whereby
the data are transmitted via at least one transmitter antenna (5.1) of the RF transmitter unit (5) with adaptable directional characteristic, whereby at least one receiver antenna (1.1.1) of the RF receiver unit (1.1) is tracked by the RF beam (5.2) of the transmitter antenna (5.1).

Furthermore, the invention discloses a related arrangement.

## Description

### FIELD OF THE INVENTION

The present invention relates to an automated method and an arrangement for wireless data transfer from a RF transmitter unit to a RF reiver unit of a moveable object in a production site. The object can be for example a car.

### BACKGROUND OF THE INVENTION

Modern cars contain more than 150 million software lines of code and counting. Installing software, e.g. firmware, drivers, multimedia, etc., is an important production step during the entire car manufacturing process, which can take significant time.

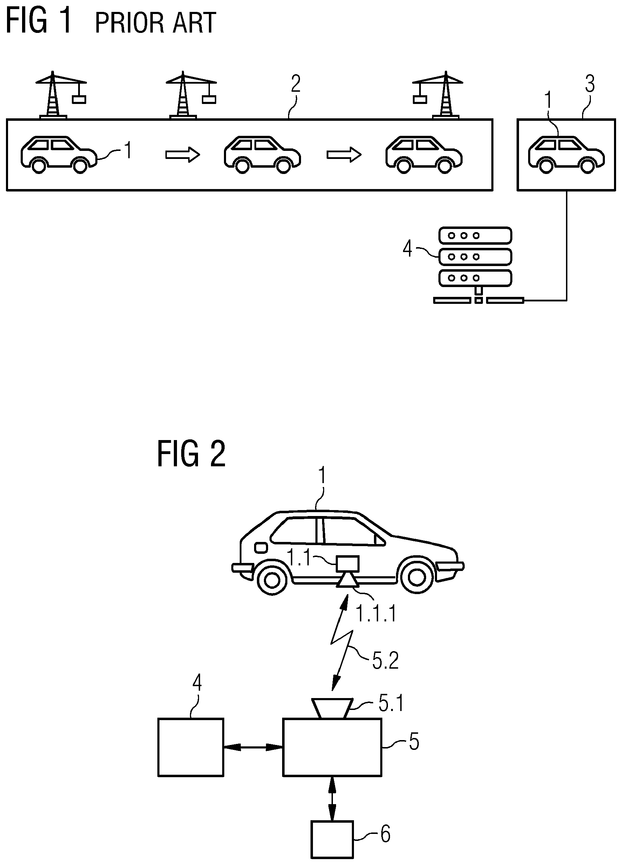

Currently, software installation in car manufacturing happens as an additional production step, after the car has been assembled. FIG. 1 shows a schematic view of a production line according to state of the art. A car 1 is moving along an assembly line 2 at a manufacturing site whereby the car is assembled in different steps. At the end of the production process the necessary software is transferred to the car 1 at a software download station 3. The software is provided by the product lifecycle management unit 4.

### SUMMARY OF THE INVENTION

The objective of the present invention is to provide a solution for software transfer from a central station to a movable object at a manufacturing site.

To accomplish the objective, the present invention provides a solution according to the independent claims. Advantageous embodiments are provided in the dependent claims.

According to a first aspect of the invention, the da-ta/software to be transmitted to and installed on the car (or other machine being produced) is transmitted by a transmitter with a beamforming-capable antenna, e.g. adaptive antenna system, AAS. The corresponding receiver is attached, either temporarily or permanently, to the car or machine being produced.

The transmitter tracks the position of the receiver, either via an external localization system, e.g. RTLS, or via beam tracking algorithms and sequences inherent to the communication protocol, e.g. 5G. By knowing the position, the antenna can radiate the signal using a narrow beam directed to the receiver.

When the position of the receiver changes, i.e. the car is transported along the production line, or to a different production cell, the signal radiated by the base station/transmitter can follow it. This can be done either via beamforming capabilities, but also with the help of reconfigurable intelligent surfaces (RIS), i.e., "programmable mirrors for radio waves".

The invention claims an automated method for wireless data transfer from a RF transmitter unit to a RF reiver unit of a moveable object in a production site, whereby the data are transmitted via at least one transmitter antenna of the RF transmitter unit with adaptable directional characteristic, whereby at least one receiver antenna of the RF receiver unit is tracked by the beam of the transmitter antenna.

In a further embodiment of the invention the RF transmitter unit is tracking the position of the RF receiver unit via a separate tracking unit, or via beam tracking algorithms and sequences inherent to the communication protocol of the RF transmitter unit.

In a further embodiment of the invention the tracking unit comprises a real time location system (= RTLS).

In a further embodiment of the invention the RF transmission frequency is above 6 GHz.

In a further embodiment of the invention the footprint of the transmitter antenna at the position of the object is smaller than the object.

In a further embodiment of the invention the object is a car assembled at a vehicle production site.

In a further embodiment of the invention the RF transmitter unit is exchanging PLM data with a product life cycle management unit.

In a further embodiment of the invention the data comprises software code executable in the object.

Further, the invention claims an arrangement for wireless data transfer at a production site, comprising:
- a RF transmitter unit, comprising at least one transmitter antenna with adaptable directional characteristic,
- a moveable object, comprising an RF receiver unit with at least one receiver antenna,
- whereby the RF transmitter unit is set up to transmit the data via the transmitter antenna to the RF receiver unit and set up to track the RF receiver unit by the beam of the transmitter antenna.

In a further embodiment of the arrangement the RF transmitter unit is set up to track the position of the RF receiver unit via a separate tracking unit, or via beam tracking algorithms and sequences inherent to the communication protocol of the RF transmitter unit.

In a further embodiment of the arrangement the tracking unit comprises a real time location system (= RTLS).

In a further embodiment of the arrangement the RF transmission frequency is above 6 GHz and/or the footprint of the transmitter antenna at the position of the object is smaller than the object.

In a further embodiment of the arrangement the object is a car assembled at a vehicle production site.

In a further embodiment of the arrangement the RF transmitter unit is set up to exchange PLM data with a product life cycle management unit.

In a further embodiment of the arrangement the data comprises software code executable in the object.

The advantages of the invention are as follows:
- Reduce the overall production time by download data (firmware, can be several 10s of GB per car) during the production process and movement between production areas. There is no need for an additional step in the production process for software downloads.
- Instead of having to transmit the signal over a large area, downlink communication becomes significantly more directed and does not interfere with the communication of other terminals inside the facility. This leads to an efficient resource usage and better spectral efficiency through spatial multiplexing.

Further benefits and advantages of the present invention will become apparent after a careful reading of the detailed description with appropriate reference to the accompanying drawings.

### BRIEF DESCRIPTION OF THE DRAWINGS

- FIG. 1: shows a schematic view of a production line according to state of the art,
- FIG. 2: shows a block diagram of an arrangement for data download in a production line with RF beam-tracking,
- FIG. 3: shows a schematic view of a production line with RF beam-tracking, and
- FIG. 4: shows a schematic view of a production line with RF beam-tracking and several production areas.

### DETAILED DESCRIPTION OF THE INVENTION

A solution based on wireless technology is disclosed, that allows a data transfer, e.g. a software transfer and preferably software installation, to be performed in parallel with other production steps, e.g., while transporting the partly finished car from one production step to the next. This solution makes the entire manufacturing process more efficient.

The solution is explained by means of a car manufacturing example. However, it can be applied to the production process of software-related products in general, which need huge data transfers during or at the end of production.

In a typical car production facility, the cars are manufactured on an assembly line. The shift to industry 4.0 will enable flexible, modular production environments. In all cases, the car will move from production step to production step. The necessary transportation might not be predetermined. During transportation phase, assembly tasks are hardly possible, resulting in some idle time during the manufacturing process. However, with the disclosed solution this idle time can be used for transferring and installing the required software and data to the car. To achieve this while maintaining an efficient manufacturing environment, wireless communication, localization, and beamforming are combined.

As an embodiment of the invention FIG. 2 shows a block diagram an arrangement for data download in a production line with RF beam forming and RF beam tracking. The arrangement comprises the RF transmitter unit 5 with the transmitter antenna 5.1. The RF transmitter unit 5 has data connections with the tracking unit 6 and the product lifecycle management unit 4. Via the RF beam 5.2 data is transferred from the RF transmitter unit 5 to the RF receiver unit 1.1 in the car 1 or attached to the car 1. The RF receiver unit 1.1 comprises a receiver antenna 1.1.1. The car 1 is movable during the assembly process whereas the RF transmitter unit 5 can be fixed or moveable. Preferably, the carrier frequency of the RF beam 5.2 is above 6 GHz.

A preferable setup requires following technical components:
- On the RF transmitter unit 5 side, at least one adaptive antenna system (AAS) that is capable of beam forming, e.g. as part of a 5G base station, or multiple AAS.
- Optional, an AAS on the RF receiver unit 1.1 side, as well.
- RF transmitter unit 5 and RF receiver unit 1.1 should preferably utilize frequencies above 6 GHz (recommended, not mandatory). In this frequency range beamforming is possible to focus radiated energy. E.g. current 5G systems use antenna array systems with >= 256 elements. A further advantage is, that smaller wavelengths potentially require smaller components (e.g. antennas).
- With an interface to the product lifecycle management (PLM) unit 4 the system/software can be used to share (preferably in real-time) information about status of the production facility as well as all items currently being produced, for example in combination with a digital twin. This information includes production status of e.g. the car, X-Y-Z location of e.g. the car, next production step of e.g. the car, and production time plan.
- The AAS and PLM can be connected and exchange control and status information with each other.

The following steps are to be used in downlink communication (base station to terminal). In the following description, the terminal refers to one or multiple wireless communication module(s) that is/are attached, or part of the car being produced.
- AAS/controller looks up the physical location of the terminal in the PLM system or performs beam searching / beam tracking procedures, e.g., according to the communication protocol (e.g. 5G).
- Adjust beam forming and gain in AAS to communicate only with the terminal (e.g. car) in question.
- If the terminal is moving, exploit knowledge of its moving path and velocity (AGV path or assembly line path) to predict future positions of the terminal and adjust the beamforming accordingly: Path can be statically pre-configured in the PLM software, path can be dynamically configured, either by the AGV itself or by the fleet manager. path can be dynamically adapted by beam-tracking capabilities of the AAS, and/or Path can be learned at the base station side through experience from previous communications with said terminal type (e.g. using machine learning).

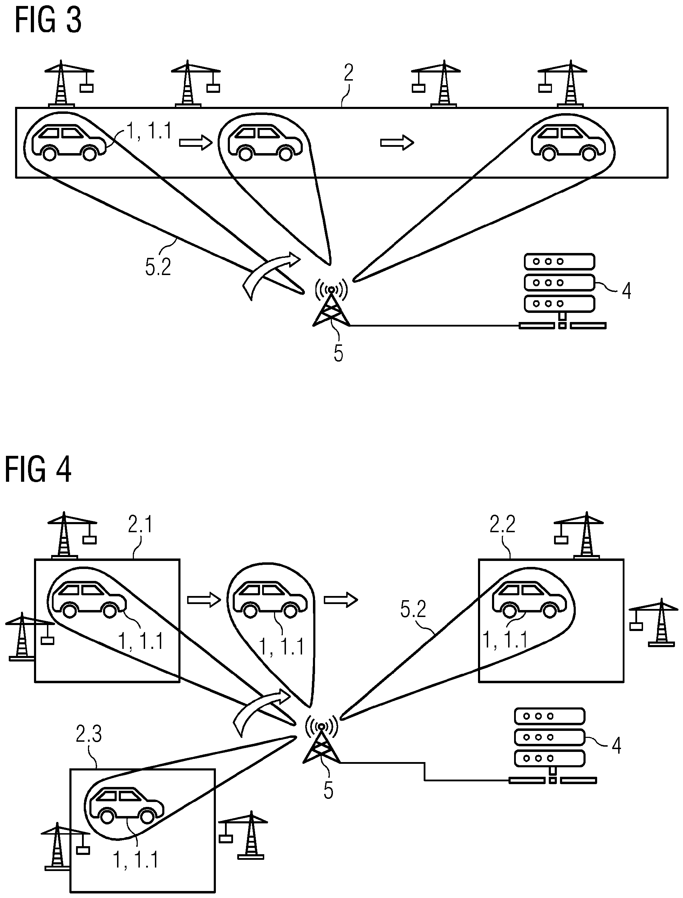

FIG.3 shows a schematic view of a production line with RF beam-tracking according to an arrangement like FIG. 2.. During the assembly of a car 1, which is equipped with a RF receiver unit 1.1, data are transmitted from the RF transmitter unit 5 via a shaped RF beam 5.2 to the RF receiver unit 1.1. The RF receiver unit 1.1 is tracked by the RF beam 5.2 during the movement of the car through the assembly line 2. Information for the data transfer and the tracking is provided by the product lifecycle management unit 4.

FIG. 4 shows a schematic view of a production line with RF beam-tracking and several production areas. The embodiment of FIG. 4 is like that of FIG. 3. During the assembly of a car 1, which is equipped with a RF receiver unit 1.1, data are transmitted from the RF transmitter unit 5 via a shaped RF beam 5.2 to the RF receiver unit 1.1. The RF receiver unit 1.1 is tracked by the RF beam 5.2 during the movement of the car from the first production area 2.1, to the second production area 2.2 and finally to the third production area 2.3.. Information for the data transfer and the tracking is provided by the product lifecycle management unit 4.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: car
- 1.1: RF receiver unit
- 1.1.1: receiver antenna
- 2: assembly line
- 2.1: first production area
- 2.2: second production area
- 2.3: third production area
- 3: software download station
- 4: product lifecycle management unit
- 5: RF transmitter unit
- 5.1: transmitter antenna
- 5.2: RF beam
- 6: tracking unit

## Claims

1. Automated method for wireless data transfer from a RF transmitter unit (5) to a RF reiver unit (1.1) of a moveable object (1) in a production site (2, 2.1 - 2.3), whereby the data are transmitted via at least one transmitter antenna (5.1) of the RF transmitter unit (5) with adaptable directional characteristic, whereby at least one receiver antenna (1.1.1) of the RF receiver unit (1.1) is tracked by the RF beam (5.2) of the transmitter antenna (5.1).

2. Method according to claim 1, whereby
the RF transmitter unit (5) is tracking the position of the RF receiver unit (1.1) via a separate tracking unit (6), or via beam tracking algorithms and sequences inherent to the communication protocol of the RF transmitter unit (5).

3. Method according to claim 2, whereby
the tracking unit (6) comprises a real time location system (= RTLS).

4. Method according to one of the previous claims, whereby the RF transmission frequency is above 6 GHz.

5. Method according to one of the previous claims, whereby the footprint of the transmitter antenna (5.1) at the position of the object (1) is smaller than the object (1).

6. Method according to one of the previous claims, whereby the object is a car (1) assembled at a vehicle production site (2. 2.1 - 2.3).

7. Method according to one of the previous claims, whereby the RF transmitter unit (5) is exchanging PLM data with a product life cycle management unit (4).

8. Method according to one of the previous claims, whereby the data comprises software code executable in the object (1) .

9. Arrangement for wireless data transfer at a production site (2, 2.1 - 2.3), comprising:
- a RF transmitter unit (5), comprising at least one transmitter antenna (5.1) with adaptable directional characteristic,
- a moveable object (1), comprising an RF receiver unit (1.1) with at least one receiver antenna (1.1.1),
- whereby the RF transmitter unit (5) is set up to transmit the data via the transmitter antenna (5.1) to the RF receiver unit (1.1) and set up to track the RF receiver unit (1.1) by the RF beam (5.2) of the transmitter antenna (5.1).

10. Arrangement according to claim 9, whereby
the RF transmitter unit (5) is set up to track the position of the RF receiver unit (1.1) via a separate tracking unit (6), or via beam tracking algorithms and sequences inherent to the communication protocol of the RF transmitter unit (5).

11. Arrangement according to claim 10, whereby
the tracking unit (6) comprises a real time location system (= RTLS).

12. Arrangement according to one of the claims 8 to 11,
whereby
the RF transmission frequency is above 6 GHz and/or the footprint of the transmitter antenna (5.1) at the position of the object (1) is smaller than the object (1).

13. Arrangement according to one of the claims 8 to 12,
whereby
the object is a car (1) assembled at a vehicle production site (2, 2.1 - 2.3).

14. Arrangement according to one of the claims 8 to 13, whereby the RF transmitter unit (5) is set up to exchange PLM data with a product life cycle management unit (4).

15. Arrangement according to one of the claims 8 to 14, whereby the data comprises software code executable in the object (1).
